(19) **Europäisches Patentamt / European Patent Office / Office européen des brevets**

(11) **EP 2 720 103 B1**

(12) **EUROPEAN PATENT SPECIFICATION**

(45) Date of publication and mention
of the grant of the patent:
**17.06.2020 Bulletin 2020/25**

(51) Int Cl.:
*G05D 7/06* (2006.01)     *B01L 3/00* (2006.01)
*G01N 30/32* (2006.01)

(21) Application number: **12290339.6**

(22) Date of filing: **10.10.2012**

(54) **Flow-rate calibration and control in a microfluidic device**

Strömungskalibrierung und Regelung in einem mikrofluidischen Gerät

Calibration et régulation de débit dans un dispositif microfluidique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.04.2014 Bulletin 2014/16**

(73) Proprietor: **Fluigent SA**
**75014 Paris (FR)**

(72) Inventors:
• **Boudot Thomas**
**26000 Valence (FR)**
• **Petit Nicolas**
**92330 Sceaux (FR)**
• **Ritty Stéphane**
**92400 Courbevoie (FR)**
• **Kieffer Charles-André**
**75013 Paris (FR)**

(74) Representative: **Osha Liang**
**2, rue de la Paix**
**75002 Paris (FR)**

(56) References cited:
**US-A1- 2003 182 991**    **US-A1- 2005 257 595**

• **Brandon Kuczenski ET AL: "Pressure-driven spatiotemporal control of the laminar flow interface in a microfluidic network", Lab on a Chip, vol. 7, no. 5, 1 January 2007 (2007-01-01) , pages 647-649, XP055205616, ISSN: 1473-0197, DOI: 10.1039/b617065j**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD OF THE PRESENT DISCLOSURE

The present disclosure provides a method for controlling flow-rates in a microfluidic device, in particular for controlling the flow-rates of fluids flowing in one or several microchannels.

BACKGROUND

Microfluidic technology deals with the control of fluids in small scale, typically sub millimeter scale such as micro scale and nano scale. Microfluidic technology was first introduced by analytical scientists with the aim of providing analytical method such as chromatography, electrophoresis or flow injection analysis with improved separation and detection performances. Since the proof of concept that a fluid could be precisely manipulated in a miniaturized environment was established, the idea that one could provide a lab-on-a-chip (LOC) or a micro total analysis system (micro-TAS) emerged which led to the integration of this technology in many other scientific domains such as in chemistry, biology or optics.

Microfluidic technology offers many advantages. A first obvious advantage is that a miniaturized device uses less fluid and less substrates and thus provides a safer working environment, less waste materials and a decrease in cost.

The use of microfluidic devices provides many other advantages. In chemistry, for example, many improvements are observed such as higher selectivity, higher yields, faster diffusive mixing, lower reaction times or higher control of biphasic reactions. In addition, since the surface to volume ratio in a microfluidic device is large, many surface-chemistry processes have been improved such as solid-phase heterogeneous catalysis or processes requiring higher/faster control of localised temperatures. In addition, microfluidic devices offer a large degree of control to the user and thus allow the design of new experimental models which give access to deeper understandings of various chemical processes.

In the same manner, the use of microfluidic devices has given rise to substantial improvements in many biological and biochemical processes such as drug screening, cell study, immunoassays, electrophoresis, blood analysis, protein crystallization, DNA sequencing and many more.

As shown above, in addition to detection and separation, a quite large panel of complex chemical or biological processes may be conducted in a single microfluidic device. Microfluidic devices may also be implemented successfully in other technologies such as in microelectronics and in optics. As a result, an ever increasing number of devices adapted to scaling down fluidic processes to the micro scale are being developed.

Additionally, microfluidic devices may be placed in parallel or in series in order to perform a plurality of functions such as in classical chemical engineering. Consequently, an ever increasing number of elements such actuators and sensors and the like (*e.g.* pumps, pressure gauges, flow-rate sensors, detection elements, heating/cooling elements, multiplexers) are also incorporated in said devices thereby increasing their complexity.

At the levels at which microfluidic devices operate (typically micro scale level or nano scale level), parameters such as surface tension, viscosity, diffusion, energy dissipation, fluidic resistance, leaks or experimental errors become predominant. Known chemical engineering methods for controlling fluid flow-rates at macro scale level cannot be transposed to the micro or nano scale levels without an extended study of those parameters. Therefore there is a need for specific methods for precisely tuning and controlling fluid flow-rates in a microfluidic device that can be used at the levels at which such devices operate.

A method for controlling the flow-rate of a given fluid within a single microchannel has been developed, and relies on calibrating the device by measuring the flow-rate $Q$ in the microchannel and the pressure difference $\Delta p$ between the inlet and the outlet of the microchannel and by determining the hydrodynamic resistance $R$ of the specific fluid within the microchannel through $Q = \Delta p/R$. However, even for such simplistic microfluidic device, this method does not take into account variations due to experimental errors, the presence of internal or external disturbance, the elasticity of the microchannel or the fluid and/or the presence of leaks, bubbles and the like.

US 2003/0182991 aims at providing improved techniques allowing better control over the flows within a microfluidic network. In the described method, pressures to be applied at the fluid reservoirs so as to affect a desired flow condition are calculated based on the physical characteristics of the network, using for example hydrostatic pressure loss calculations. Thus, the described method requires to know the physical characteristics of the network and there is a need for a method able to control flow rates in an unknown micro fluidic network.

Accordingly, there is a need for a method for controlling the flow-rate of a fluid flowing in a microfluidic network that can be operated including on a microfluidic network that includes one or a plurality of microchannels.

SUMMARY

The present disclosure provides, according to a first aspect, a method for controlling a flow-rate of at least one fluid flowing in a microfluidic network comprising at least one microchannel and a plurality of inlet/outlet interface ports, as described in claim 1.

The present disclosure provides, according to a second aspect, a microfluidic network controller for controlling a flow-rate of a fluid flowing in a microfluidic network comprising at least one microchannel and a plurality of inlet/outlet interface ports, as described in claim 14.

Even for complex microfluidic networks (*i.e.* comprising a plurality of microchannels), the user is now able to find the right combination of pressure values leading to the desired flow-rates. Indeed, the proposed method can be applied to complex microfluidic networks the control of which requires to account for numerous parameters such as the characteristics of the microfluidic network architecture, the channel coupling effects, the elasticity of each microchannel within the network, the elasticity of the fluids, the measurement errors, the presence/growth/fading of disturbances, leaks, bubbles, clogging, blockages and the like.

The present disclosure provides, according to a third aspect, a microfluidic device comprising a microfluidic network and the above mentioned microfluidic network controller.

BRIEF DESCRIPTION OF DRAWINGS

Figure 1 shows a schematic view of an example of a microfluidic network.

Figure 2 shows a flow-rate measurement as a function of time in response to an applied pressure.

Figure 3A is a schematic view of an exemplary architecture of an identification module for calibrating ranges of input pressure values and output flow-rate values of a microfluidic network.

Figure 3B is a schematic view of an exemplary architecture of a command module for applying ranges of target pressure values according to predetermined flow-rate values of a microfluidic network.

Figure 4 is a flow chart showing the relationship between applied input pressures and measured output flow-rate values for a model of the present disclosure.

Figure 5 shows a schematic view of a microfluidic network used to test the performances of a method of the present disclosure.

Figure 6 shows predetermined flow-rates as a function of time at flow-rate measuring points of the microfluidic network according to figure 5.

Figure 7 shows flow-rate values as a function of time after application of target pressures computed according to a model of the present disclosure and corresponding to the predetermined flow-rates according to figure 6. An example of state-of-the-art control performances is provided for comparison.

Figure 8 shows behaviour of the microfluidic network according to figure 5 using a microfluidic network controller according to the present disclosure. The figure shows the disturbance rejection capabilities of embodiments of the present disclosure.

Figure 9 shows the example systems of figure 3A and 3B in the context of a computing environment.

DETAILED DESCRIPTION

Specific embodiments of the present disclosure will now be described in detail with reference to the accompanying figures. In the following detailed description of embodiments of the present disclosure, numerous specific details are set forth in order to provide a more thorough understanding of embodiments of the present disclosure. However, it will be apparent to one of ordinary skill in the art that embodiments of the present disclosure may be practiced without these specific details. In other instances, well-known features have not been described in detail to avoid unnecessarily complicating the description.

Herein, the words "comprise/comprising" are synonymous with (means the same thing as) "include/including," "contain/containing", are inclusive or open-ended and do not exclude additional, unrecited elements. Limit values of ranges using for example the words "from", "from...to", "below", "more than", "greater than", "less than", "lower than", and "at least" and the like are considered included in the ranges.

As used in the present document, the terms "microfluidic device" refer to a device which comprises at least one microfluidic network and a plurality of actuators and sensors (*e.g.* pumps, pressure gauges, flow-rate sensors, detection elements, heating/cooling elements, multiplexers). A microfluidic network comprises one or more microchannels and a plurality of inlet/outlet interface ports allowing the introduction/discharge of fluids within the one or more microchannels. In addition, we define a microchannel as a channel which comprises, on at least a portion of its length, a section having a width smaller than 1 millimetre and/or a section having a surface to volume ratio greater than 1 mm$^{-1}$, preferably greater than 4 mm$^{-1}$, more preferably greater than 10 mm$^{-1}$, for example greater than 1 $\mu$m$^{-1}$.

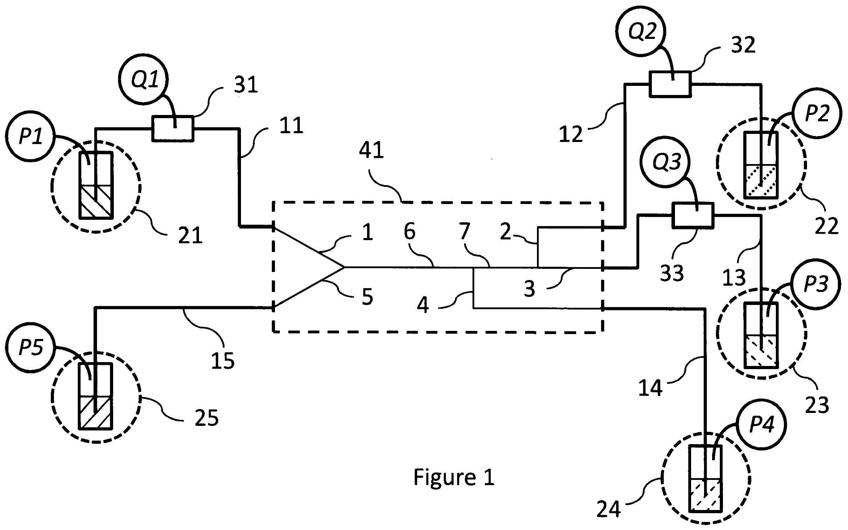

Figure 1 shows a schematic view of an example of a microfluidic network which comprises:

- a plurality of microchannels comprising small width sections (1-7) and large width sections (11-15),
- a plurality of inlet/outlet interface ports (21-24) wherein the fluids are introduced/discharged, wherein pressures are applied and wherein pressure values (*P1-P5*) are measured (in this example, the number of interface ports *M* is 5), and
- a plurality of flow-rate measuring points (31-33) wherein flow-rate values (*Q1-Q3*) are measured (in this example, the number of flow rate measuring points *L* is 3).

As shown in figure 1, by imposing one or more pressure differences $\Delta p$ between 2 or more inlet/outlet interface ports, a flow of one or more fluids within the microfluidic network is generated. In some embodiments, small width sections (1-7) of microchannels are contained within one or more microfluidic chips (41). The pressure on one or more inlet/outlet interface ports may be applied with various pressure control means, for example, with a pressurized reservoir, a membrane pump, a syringe pump, or a peristaltic pump, preferably a pressurized reservoir. However, it will be apparent to one of ordinary skill in the art that other pressure control means can be used. In some embodiments, the pressure applied in one or more inlet/outlet interface ports is atmospheric pressure.

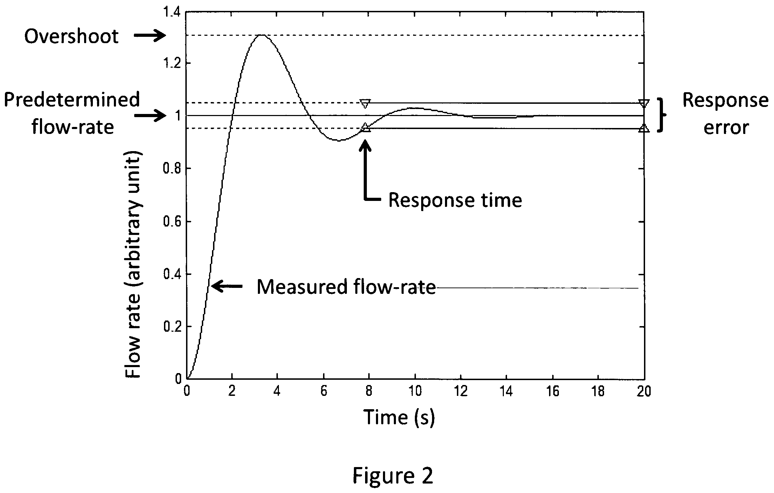

Figure 2 shows a classical response time of a microfluidic device which corresponds to the time needed for the microfluidic network to reach its equilibrium through a transient regime in response to one or several applied input pressures. The response time of a microfluidic network can also be defined more specifically as the time between the application of one or several input pressures and the stabilization of a flow-rate value within a response error. Usually, the response time is defined within a response error which is less than 5%, but it may also be defined in relation to smaller response errors, such as 3%, or 1%. The overshoot is the percentage of the flow-rate exceeding a predetermined flow-rate after application of a corresponding target pressure to reach the desired flow-rate. A flow-rate value is defined as a static flow-rate value when its value does not fluctuate over a static error margin. Preferably, the static error is equal to, or lower than the response error. For example, the static error is chosen less than 2% for a response error margin of 5%, less than 1% for a response error margin of 3%, and less than 0.5% for a response error margin of 1%.

One object of the present disclosure is to provide a method able to precisely control flow-rate profiles within a microfluidic network. For example, by stabilizing one or more predetermined flow-rates facing disturbances, and/or by lowering overshoot(s) and/or response time(s) between the application of computed target pressure(s) and the establishment of the corresponding predetermined flow-rate(s).

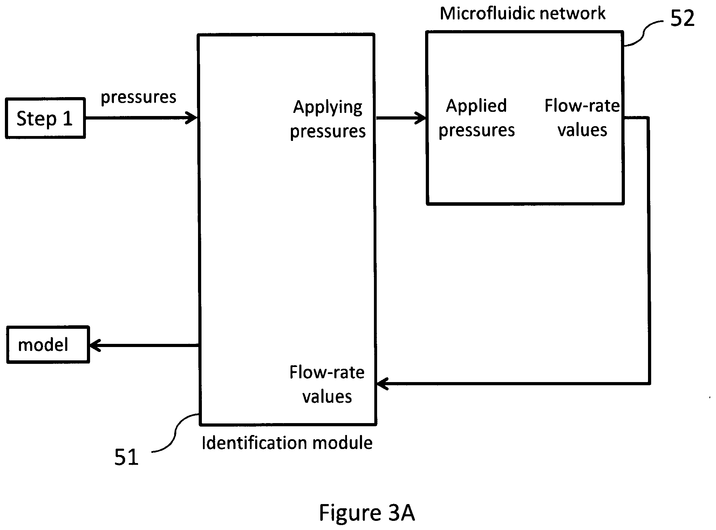

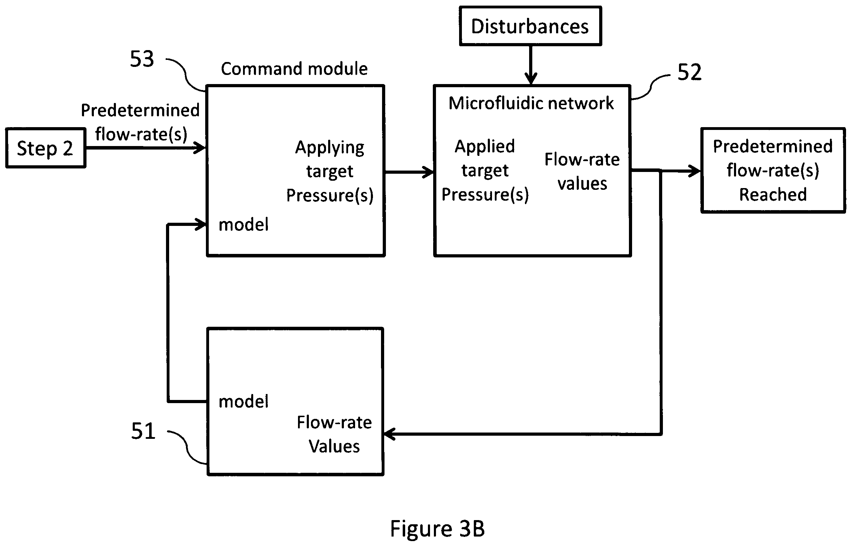

Shown on figures 3A and 3B is an identification module able to identify a microfluidic network by learning/estimating the relationship/parameters linking the applied pressure(s) to the measured flow-rate value(s). Since that using a model (*i.e.* static model) which consists of testing/measuring a plurality of equilibria between the applied pressure(s) and the measured flow-rate value(s) is rather slow and tedious for identifying complex microfluidic networks, the Applicants have found that a faster and more precise model (*i.e.* dynamic model) able to estimate parameters between applied pressure(s) and measured flow-rate value(s) through the transient regime can be established. More specifically, the model permits to establish the relationship between pressure(s) and flow-rate(s) within the microfluidic network by estimating parameters based on the output flow-rate values in response to input pressure values.

Shown on figure 3B is a command module able to compute and apply target pressure value(s) at the inlet/outlet interface port(s) in response to predetermined flow-rate value(s) at the flow-rate measuring point(s) on the basis of said estimated parameters of the model of the microfluidic network. In fact, the target pressure value(s) may be estimated through a static command able to compute the target pressure value(s) without modifying the transient regime through which the network reaches its equilibrium.

Figure 3A shows an exemplary architecture of an identification module for calibrating ranges of input pressure values and output flow-rate values of a microfluidic network. The exemplary architecture includes an identification module (51) for calibrating ranges of input pressure values and output flow-rate values of a microfluidic network (52) comprising *M* inlet/outlet interface ports and *L* flow-rate measuring points. In a first step, the identification module applies a first pressure at each of the *M* inlet/outlet interface ports of the microfluidic network. In response, one or more flow-rate values are measured at each of the *L* flow-rate measuring point in the microfluidic network by flow-rate measuring means. In some embodiments, the flow-rate values are measured at a first predetermined rate. Further, the pressure values measured at the *M* inlet/outlet interface ports and the one or more flow-rate values measured at each of the *L* flow-rate measuring point are collected by the identification module under the form of a time series. A plurality of new pressures are then reapplied to the *M* inlet/outlet interface ports by the identification module until sufficient numbers of pressures values and flow-rate values are collected by said identification module. The plurality of pressures may be applied randomly, according to presets or at a second predetermined rate, preferably, randomly. For example, the application of the pressures ranges from 500 ms to 5 sec, preferable from 1 sec to 3 sec. Preferably, the first predetermined rate is lower than the application of the pressures. For example, the first predetermined rate ranges from 10 ms to 500 ms, preferably 100 ms. The identification module estimates parameters of a model of the microfluidic network in response to input pressure values based on the collected pressure values and output flow-rate values. The estimated parameters of the model are sent to the command module.

Figure 3B is a schematic view of an exemplary architecture of a command module for applying ranges of target pressure values according to predetermined flow-rate values of a microfluidic network. The exemplary architecture includes a command module (53) for managing and/or maintaining ranges of input pressure values and output flow-rate values of a microfluidic network (52) comprising *M* inlet/outlet interface ports and *L* flow-rate measuring points. Figure 3B shows a second step in which the command module computes a target pressure value for each of the *M* inlet/outlet interface ports corresponding to a predetermined flow-rate value at each of the *L* flow-rate measuring point on the basis of the estimated parameters of the model of the microfluidic network in response to input pressure values. Further, the command module applies the computed target pressure value at each of the *M* inlet/outlet interface ports.

The identification module (51) can optionally determine and update the parameters of the microfluidic network in order to take into account appearance of new disturbances (*e.g.* external perturbations, variation of counter pressures, change in fluidic resistivity and/or fluid viscosity, leaks, bubbles, clogging, blockages, variations of the volumes of the fluids at the inlet/outlet interface ports etc...). Accordingly, the combination of the identification module and the command module permits the identification of any physical modifications in the microfluidic network because the parameters of the model of the microfluidic network are occasionally or periodically re-estimated based on the applied target pressure value and the measured output flow-rate values and because the target pressure value at each of the at least one inlet/outlet interface ports corresponding to the predetermined flow-rate value at the flow-rate measuring points are occasionally or periodically re-computed and re-applied.

In some embodiments, the command module that successively applies the plurality of pressures on the at least one inlet/outlet interface port, while the identification module measures, at the flow-rate measuring point, the time series of the plurality of flow-rate values.

In some embodiments, the pressure measuring means are pressure based pumps and/or syringe pumps. For example, for the pressure based pumps, the pressure measuring means is preferably a pressure sensor located on a pneumatic circuit connected to the inlet/outlet interface ports and for syringe pumps, the pressure measuring means is a mechanical pressure sensor located either on the microfluidic network or within the syringe pump systems. In some embodiments, the flow-rate measuring means is a flow sensor such as but not limited to thermal sensors, Coriolis based sensors, or weighing systems. However, it will be apparent to one of ordinary skill in the art that other pressure measuring means and other flow-rate measuring means can be used. In some embodiments, the fluid is a gas and/or a liquid such as a polar or non-polar solvent optionally comprising a soluble or unsoluble material. For example, the liquid is selected from the list comprising water, alcohols, and/or oils. In some embodiments, one or more fluids comprise organic, inorganic, and/or biological materials such as organic reagents, cells, bacteria, and/or particles (*e.g.* magnetic particles).

We consider now a microfluidic network that comprises *M* input pressure commands (*i.e.* pressure values) and *L* output flow-rate values. We note $p^T$ the vector of the pressure commands and $q^T$ the vector of the flow-rate values:

$$p^T = [p_1 \ldots p_M] \text{ and } q^T = [q_1 \ldots q_L].$$

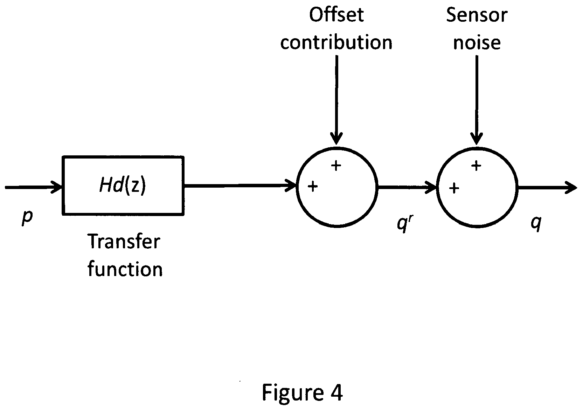

The identification module will now be described in relation with figure 4. The proposed (discrete and dynamic) model for each one of the *L* flow-rate measuring points is the following:

$$Q(z) = H_d(z) \cdot P(z)$$

wherein $Q(z)$ represents flow-rates, $P(z)$ represents command pressures and $H_d(z)$ represent a dynamic linear transfer function of the model. More specifically, $Q(z)$, $P(z)$ and $H_d(z)$ are the *z*-transformed variables usually used in discrete time description of signals and systems.

In some embodiments an offset contribution is taken into account and the model is the following:

$$Q^r(z) = H(z) \cdot P(z) + B(z) \qquad (1)$$

$Q^r(z)$ represents true flow-rates, $H(z)$ represents the dynamic linear transfer function of the system, $P(z)$ represents command pressures and $B(z)$ is an offset contribution. More specifically, the dynamic linear transfer function $H(z)$ represents a matrix each element of which is a scalar transfer function showing the influence of a pressure to a flow-rate. In addition, the offset contribution $B(z)$ represents residual flow-rates due to, for example, undesirable counter pressures within the system or variations of elasticity of the microchannels or the fluids, the presence of leaks, bubbles, clogging, blockages, variations of the volumes of the fluids at the inlet/outlet interface ports, and the like. In some embodiments, the offset contribution is minimized (i.e. $\approx 0$).

In some embodiments, an additional error contribution of the flow-rate measurement means due to, for example, sensor noise is also taken into account by the model:

$$q(n) = q^r(n) + e(n)$$

$q(n)$ represents the measured flow-rate value at sample n of the time series, $q^r(n)$ represents the true flow-rate value at sample n and $e(n)$ represents the error contribution at sample n. The z-transformed form is:

$$Q(z) = Q^r(z) + E(z)$$

In some embodiments, the error contribution is minimized to insignificant values (i.e. $\approx 0$).

The model will now be further described according to nondimensionalized pressure commands and flow-rate values. However, it will be apparent to one of ordinary skill in the art that the model may be realized without nondimensionalization. We introduce the following nondimensionalized parameters:

$$y_i^r(n) \quad = \quad \frac{q_i^r(n)}{Q_i}$$

$$y_i(n) \quad = \quad \frac{q_i(n)}{Q_i}$$

$$u_j(n) \quad = \quad \frac{P_j(n)}{P_j^{max} - P_j^{min}}$$

where $Q_i$ is the full scale of one of the $L$ flow-rate measuring means, $q_i$ is a measured flow-rate value, $P_j^{max}$ and $P_j^{min}$ are the maximum and minimum pressure of a given pressure ranges for one of the M flow-rate measuring means. Consequently, the nondimensionalized model may therefore be written as follows:

$$Y^r(z) = H^{adim}(z) \cdot U(z) + B^{adim}(z)$$

$$y(n) = y^r(n) + e^{adim}(n)$$

$$H_{i,j}^{adim}(z) \quad = \quad \frac{P_j^{max} - P_j^{min}}{Q_i} \cdot H_{i,j}(z)$$

$$B_i^{adim}(z) \quad = \quad \frac{1}{Q_i} \cdot B_i(z)$$

$$e_i^{adim}(n) \; = \; \frac{1}{Q_i}.\,e_i(n)$$

wherein the dynamic linear transfer function $H^{admin}(z)$ of the model is:

$$H^{adim}(z) = \left[\frac{b_0^{i,j} + b_1^{i,j}.z^{-1} + \cdots + b_p^{i,j}.z^{-p}}{1 + a_1^i.z^{-1} + \cdots + a_p^i.z^{-p}}\right]_{i=1..L,\,j=1..M}$$

wherein each term is the matrix of transfer functions. Accordingly, identifying the model relies on estimating the values of the parameters $(a_l^i)_{l=1\ldots q,\,i=1\ldots L}$ and $(b_k^{ij})_{k=1\ldots p,\,i=1\ldots L,\,j=1\ldots M}$ on the basis of the known input command values $(u(n))_{n=1\ldots N}$ and output measurement values $(y(n))_{n=1\ldots N}$ for each one of the $L$ flow-rate measuring points.

From now on $p$ and $q$ are chosen to be equal; however, it will be apparent to one of ordinary skill in the art that $p$ and $q$ may be chosen differently. Typically, the larger $p$ (and $q$) is set, the more precise are the estimations. However, if $p$ is set too large, excessive computing is needed. In some embodiments, $p$ ranges from 5 to 15, preferably from 8 to 12, more preferably $p = 10$.

Since the time characteristic of the offset contribution $T_{off}$ (typically in the minute range) is greater than the time characteristic $T_{dyn}$ of the dynamic linear transfer function $H^{admin}(z)$ and the time characteristic error contribution (typically in the second range), the offset contribution function can be rendered negligeable ($B(z) \approx 0$) by only considering flow-rate values measured within a first predetermined time ($T_{HP}$) after application of the pressures. Indeed, the offset contribution amounts to zero or close to zero in the high frequency regime (high-pass filter for frequency higher than $1/T_{HP}$).

In order to obtain an improved estimation of the parameters of the dynamic linear transfer function $H^{admin}(z)$ and the parameters of the error contribution $e(n)$, the first predetermined time ($T_{HP}$) is set larger than a characteristic time $T_{dyn}$. $T_{dyn}$ is the characteristic time of the evolution of dynamic linear transfer function $H^{admin}(z)$ and reflects the speed at which the dynamic equilibrium is reached. Typically, a response time at 5% is equal to $3 \times T_{dyn}$. Accordingly, the response time and the characteristic time $T_{dyn}$ are determined by the microfluidic network controller and the first predetermined time ($T_{HP}$) is set larger than or equal to the characteristic time $T_{dyn}$. Depending on the value of the response time of the microfluidic network, $T_{dyn}$ is preferably less than 10 sec and typically less than 1 sec.

In order to obtain an improved estimation of the offset parameters, a second predetermined time ($T_{LP}$) is set smaller than the first predetermined time ($T_{HP}$). This second predetermined time corresponds to a low frequency regime (low-pass filter for frequency lower than $1/T_{LP}$), in which the error contribution (*e.g.* sensor noises) is negligible ($E(z) = 0$). By operating in this low frequency regime, E(z) can be neglected and the parameter $B(z)$ can be estimated. Preferably, $T_{LP}$ ranges from $T_{dyn}$ to $T_{HP}$.

Now that all parameters of the model are estimated, the static command of the command module able to estimate and apply target pressure(s) in response to predetermined flow-rate value(s) may be applied to estimate a target pressure value at each of the at least one inlet/outlet interface ports corresponding to a predetermined flow-rate value at the flow-rate measuring point, the predetermined flow-rate value(s) being output value(s) and the target pressure value(s) being input value(s) of the static command. At first, the dynamic expression (1) is estimated in the following static expression:

$$y^{eq} = K.\,u^{eq} + b^{adim}$$

wherein $y^{eq}$ and $u^{eq}$ are the normalized pressure and flow-rate functions of the flow-rate values and the target pressures at equilibrium (*e.g.* after the response time), respectively, and $K$ the static gain to be inverted. More specifically, $K$ is the limit of the dynamic linear transfer function $H(z)$ according to the following formula:

$$K = \lim_{z \to 1} H^{adim}(z) = \left[\frac{b_0^{i,j} + b_1^{i,j} + \cdots + b_p^{i,j}}{1 + a_1^i + \cdots + a_p^i}\right]_{i=1..L,\,j=1..M}$$

The $K$ matrix cannot be directly inverted, and matrix inversion scheme such as a mean square method can be used to estimate the inverted matrix. For example, according to the mean square method, one computes the $u$ variable that minimizes the $J$ expression defined as:

$$J = \tfrac{1}{2} \, \| \, K.u + b^{adim} - y^{eq} \|^2$$

Additionally, the *u* variable has to comply with minimum and maximum limits as in usual mean square methods. The optimimum can be computed according to various optimization algorithms, and in particular quadratic programming algorithms can be applied.

The above-described exemplary identifying module is thus able to identify a microfluidic network by applying pressures and learning the relationship and estimating the parameters linking the applied pressures at the inlet/outlet interface port(s) to the measured flow-rate values within the microfluidic network. In addition, the present disclosure provides a command module able to compute and apply target pressure value(s) at the inlet/outlet interface port(s) in response to predetermined flow-rate value(s) at the flow-rate measuring point(s) on the basis of said estimated parameters.

The combination of the proposed exemplary identifying module and command module is able to estimate the parameters linking applied target pressure value(s) in response to predetermined flow-rate value(s) by including measurement errors and the major parameters of the microfluidic network architecture such as fluidic resistivity, channel coupling effects, microchannel/fluid elasticity, presence of leaks, bubbles, clogging, blockages, and/or variations of the volumes of the fluids at the inlet/outlet interface ports. During the identification, the method determines the relationship between the value(s) of the applied pressure(s) and the value(s) of the measured flow-rate(s) at each one of the *L* flow-rate measuring points. During the command, the controller computes which target pressure (or target pressure combination) will lead to the desired/predetermined flow-rate(s).

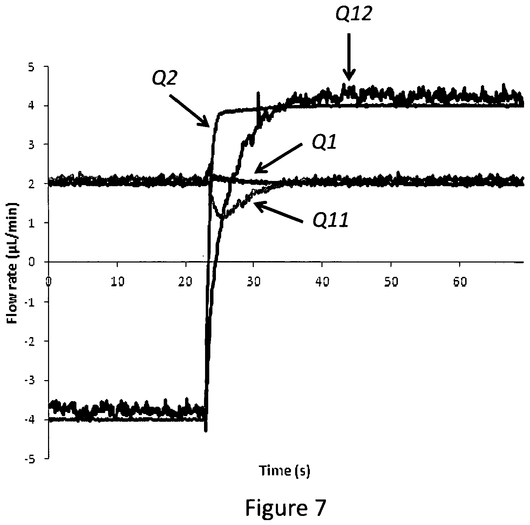

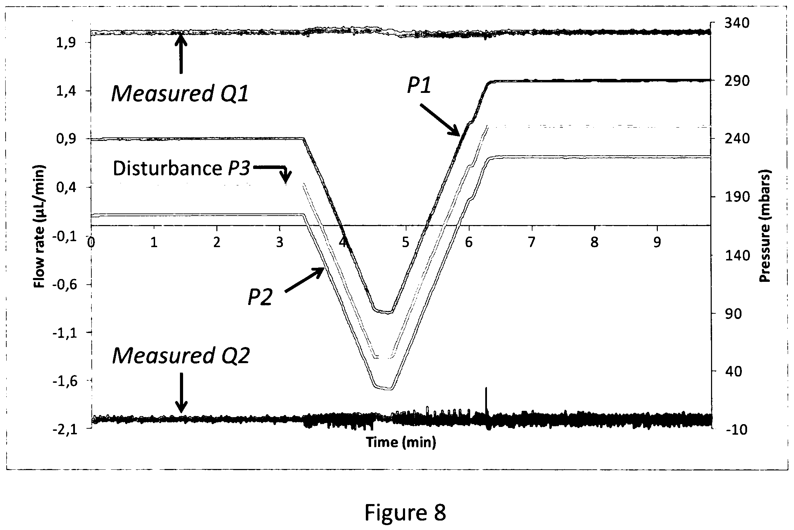

The proposed methods thus enable the flow-rate control of any microfluidic network with the benefits of improved accuracy and stability such as lower response times, lower hysteresis, lower overshoots, as shown in figures 7 and 8. It may be applied to an unknown microfluidic network to help a user understand the behavior of the system.

For example, the proposed flow-rate control methods can be complemented with notifying a user that the requested or desired flow-rates, in case the predetermined flow-rates of the command phase are input by a user, cannot be reached by the microfluidic system under control. Indeed, in some embodiments, the microfluidic network may work within pressure actuator limits (maximum/minimum pressure working ranges) and/or the microfluidic network may be incompatible with the requested predetermined flow-rate(s). Preferably, the applied pressures and the target pressure(s) are applied within predetermined working ranges. Accordingly, in some embodiments, the microfluidic network controller comprises means for alerting a user if a computed target pressure value falls outside the predetermined working range and/or for computing one or more target pressures outside one or more working ranges in response to one or more user-defined predetermined flow-rates, according to a user-defined order of preference of said working ranges.

A large type and number of microfluidic networks (from single microchannel with one input pressure to mass parallel systems with independent microchannels, or single/multiple complex microfluidic networks in parallel or series with several coupling effects between the microchannels) can therefore be controlled using the proposed methods.

In some embodiments, the user may further set new pressure working ranges at any of the *M* inlet/outlet interface ports or new predetermined flow-rates at any of the *L* flow-rate measuring point. For example, in some embodiments, one or more microchannels are activated to reach a predetermined flow-rate(s) while one or more other microchannels are deactivated (*i.e.* closed).

In addition, the proposed methods can be implemented in presence of positive and negative flow-rate(s) as well as stopping flow(s). For example, a reverse-flow or a stop-flow is obtained by the command module by applying the corresponding target pressure(s). The proposed method is also able to deal with measurement errors and/or disturbances due to offset contributions (such as atmospheric pressure variation, fluid level variation into the tanks) as well as modifications of the microfluidic network during use (for example, partial clogging of the microchannels for instance), without consequences on the flow-rate control and accuracy.

As the microfluidic network controller knows the applied pressure(s) and the measured flow-rate(s) within the microfluidic network, it permits determination and update of the parameters of the microfluidic network (through the estimation of the dynamic linear transfer function and, optionally, the estimation of the error contribution and/or the offset contribution) due to, for example, a change in fluidic resistivity and/or fluid viscosity. Accordingly, the proposed microfluidic network controller is able to identify any physical modification in the microfluidic network such as clogging or bubbles (including their volume and localization in the microfluidic network).

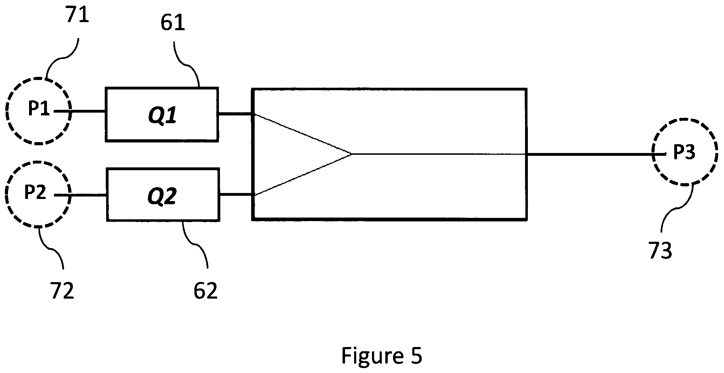

Performances of a microfluidic network controller according to the present disclosure is compared to a controller according to the prior art. More specifically, the proposed microfluidic network controller has been tested on a microfluidic network (*see* figure 5) comprising an IMT glass chip (ref. ICC-SY05) and compared to high precision syringe pumps on the same chip.

Figure 5 shows a schematic view an example of a microfluidic network used to test the performances of a method according to the present disclosure. The microfluidic network comprises microchannels, 3 inlet/outlet interface ports (71-73) and 2 flow-rate measuring points (61, 62).

The following Fluigent devices have been used for the testing of a microfluidic network controller: one MFCS™ FLEX 1000 mbar, one Fluiwell 2 mL and one Flowell (2 flow-rate channels, range of 7 μL/min), the fluid used being deionized water. The MFCS™ FLEX and the Fluiwell have been replaced by two high precision syringe pumps with a 250 mL syringe each for the comparative test.

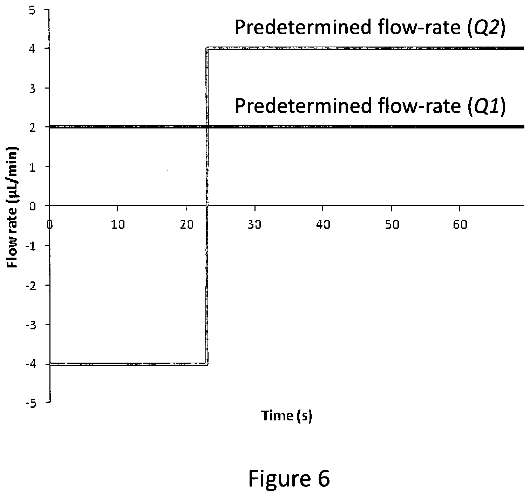

The response time and the flow-rate behavior (e.g. response time, overshoot, hysteresis) of these two experiments have been compared when a predetermined flow-rate Q2 is ordered from -4μL/min to 4 μL/min at the flow-rate measuring point 62 while a predetermined flow-rate Q1 is ordered to stay constant at 2 μL/min at the flow-rate measuring point 61 (see figure 6).

Figure 7 shows the measured flow-rates Q1 and Q2 in the conditions described above (conditions of figure 6) using the microfluidic network controller and the measured flow-rates Q11 and Q12 using high precision syringe pumps in the same conditions. The use of the microfluidic network controller leads to a shorter response time compared to the high precision syringe pumps solution. The response times are respectively 1.7 sec using of the microfluidic network controller and 8.5 sec using high the precision syringe pumps solution. In addition, using the microfluidic network controller permits limited interactions between Q1 and Q2 compared to the high precision syringe pumps solution. With the proposed method, the modification on Q1 stays punctual and limited: it leads to an over-dispensed volume of 0.01μL. With the syringe pump solution the perturbation on Q11 leads to an under-dispensed volume of 0.07μL.

Figures 8 illustrates exemplary performances of a microfluidic network controller according to the present disclosure for controlling a microfluidic network submitted to disturbance such as external perturbation. After estimation of the parameters of the microfluidic network of figure 5 by the identification module, predetermined flow-rates Q1 and Q2 of 2 μL/min and -2 μL/min at the flow-rate measuring points 61 and 62 are sent to the microfluidic network controller. Then, the system is submitted to an external perturbation, the value of the applied pressure P3 at the inlet/outlet interface port 63 being manually decreased and increased, respectively from 200 mbar to 50 mbar and from 50 mbar to 250 mbar. Figure 8 also describes the P1 and P2 variations calculated by the microfluidic network controller to maintain the flow-rates constant while the perturbations are submitted at P3. Table 1 quantifies the performances of the flow-rate control and shows that the proposed microfluidic network controller and method are able to maintain performances even on a microfluidic network submitted to disturbances such as external perturbations, the maximal value of the standard deviation being 0.03μL/min (during disturbance).

Table 1

|  | Average (μL/min) | Standard deviation (μL/min) |
| --- | --- | --- |
| **Q1 before disturbance** | **2,00** | **0,01** |
| Q1 during disturbance | 1,99 | 0,02 |
| **Q1 after disturbance** | **2,00** | **0,01** |
| Q2 before disturbance | -2,00 | 0,01 |
| **Q2 during disturbance** | **-1,99** | **0,03** |
| **Q2 after** disturbance | -2,00 | 0,03 |

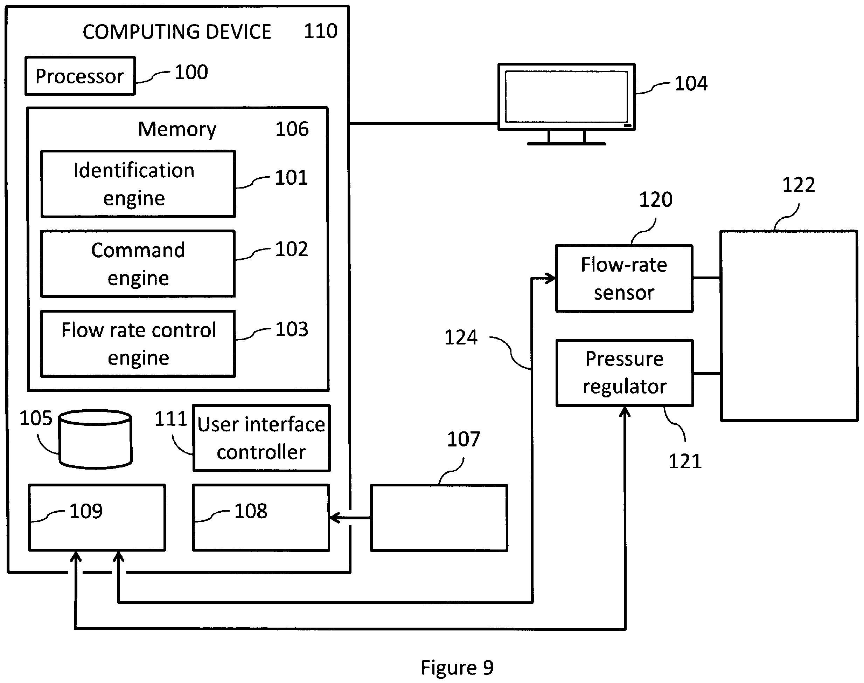

Figure 9 shows the example identification module and command module of figures 3A and 3B in the context of a computing environment.

In the illustrated example, the computing device 110 is communicatively coupled via sensory devices, for example flow-rate sensors 120, and control devices, for example pressure regulator for sending pressure commands 121, with a microfluidic network 122 for controlling a flow-rate of one or several fluids flowing therein.

In the shown implementation, a computing device 110 implements components, such as the identification engine 101, the command engine 102 and the flow-rate control engine 103. The identification engine 101, command engine 102 and flow-rate control engine 103 are illustrated as software, but can be implemented as hardware or as a combination of hardware and software instructions.

The identification engine 101 includes functionality to estimate parameters of a model of the microfluidic network 122 response to input pressure values based on pressure values applied on the microfluidic network 122 (for example through the pressure regulator 121) and measured time series of output flow-rate values (for example through the flow-rate sensors 120). For example, the identification engine 101 may include functionalities to calculate respective estimate values of parameters of a dynamic linear transfer function, of offset parameters, and/or error parameters. The model identification performed by the identification engine 101 may correspond to initial system identification in reference to the system illustrated on figure 3A, and/or to dynamic system identification in reference to the system illustrated on figure 3B, so that the identification engine 101 may include functionalities for both initial identification and dynamic identification.

The command engine 102 includes functionality to compute a target pressure value that corresponds to a predetermined flow-rate value, in that the predetermined flow-rate value corresponds to an output value of the model of the microfluidic network response to the target pressure value identified by the identification engine 101. The predetermined flow-rate value may be user determined and input to the computing device 110 through a user interface controller 111, an input device such as a keyboard, a mouse or a touchscreen (not shown) and a display 104.

The flow-rate control engine 103 includes functionality to apply target pressure values determined by the command engine 102 to the interface ports of the microfluidic network 122. Such target pressure values may for example be applied to the microfluidic network through pressure regulator 121, via an interface module 109 of the computing device.

When executing, such as on processor 100, the identification engine 101, the command engine 102, and the flow-rate control engine 103 are operatively connected with each other. For example, the identification engine 101, the command engine 102 and the flow-rate control engine 103 may be part of a same software application, the identification engine 101 may be a plug-in for the command engine 102 and the flow-rate control engine 103, or another method may be used to connect the identification engine 101, the command engine 102 and the flow-rate control engine 103. In one or more embodiments, the identification engine 101, the command engine 102, and the flow-rate control engine 103 are operatively connected to the user interface controller 111 and display 104. In one or more embodiments, the identification engine 101, the command engine 102, and/or the flow-rate control engine 103 are operatively connected to a control device (not shown), which for example may provide requested predetermined flow-rates to the command engine 102.

The computing device 110 may be a computer, computer network, or other device that has a processor 100, memory 106, data storage 105, and other associated hardware such as an interface module 109 and a media drive 108 for reading and writing a removable storage medium 107. The removable storage medium 107 may be, for example, a compact disk (CD); digital versatile disk / digital video disk (DVD); flash drive, portable mass storage; etc. The removable storage medium 107 and/or local memory 105 may contain instructions, which when executed by the computing device 110, cause the computing device 110 to perform one or more example methods described herein. Thus, the removable storage medium 107 and/or local memory 105 may include instructions for implementing and executing the example identification engine 101, command engine 102 and/or flow-rate control engine 103. At least some parts of the identification engine 101, the command engine 102 and/or the flow-rate control engine 103 can be stored as instructions on a given instance of the removable storage medium 107, removable device, or in local data storage 105, to be loaded into memory 106 for execution by the processor 100. Specifically, software instructions or computer readable program code to perform embodiments may be stored, temporarily or permanently, in whole or in part, on a non-transitory computer readable medium such as a compact disc (CD), a local or remote storage device, local or remote memory, a diskette, or any other computer readable storage device.

Although the illustrated example identification engine 101, command engine 102 and flow-rate control engine 103 are depicted as a program residing in memory 106, part or all of any of the identification engine 101, command engine 102 and/or flow-rate control engine 103 may be implemented as hardware, such as an application specific integrated circuit (ASIC) or as a combination of hardware and software.

In this example system, the computing device 110 receives incoming data 124, such as measured flow-rates for the identification engine 101 to estimate parameters of a model of the microfluidic network response to input pressure values. The computing device 110 can receive many types of data sets or commands via the interface module 109.

The computing device 110 may also receive incoming data or commands (such as requested predetermined flow-rate for use by the command engine 102) through the interface module 109 from a control device to which it would then be operatively connected.

The computing device 110 may also generate or produce control signals or output data to be used or implemented by control devices, for example pressure regulator for sending pressure commands 121, to which it is coupled. Such control signals or output data may be transmitted to other devices through the interface module 109. For example, a command for successively applying a plurality of pressures on at least one inlet/outlet interface port of the microfluidic network 122 may be transmitted to pressure regulator 121, so that the identification engine 101 of the computing device 110 may receive and exploit time series of flow-rate values measured by the flow-rate sensors 121 in response to the applied pressure values.

While the invention has been described with respect to preferred embodiments, those skilled in the art will readily appreciate that various changes and/or modifications can be made to the invention without departing from the scope of the invention as defined by the appended claims. In particular, the invention is not limited to specific embodiments regarding the architecture with an identification module and command module for identifying parameters of a model of the micro fluidic network and computing a pressure command corresponding to target flow rates, flow rate sensors and pressure controllers and may be implemented using various architectures without departing from its spirit or scope as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and subcombinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

**Claims**

1.   A method for controlling a flow-rate of at least one fluid flowing in a microfluidic network comprising at least one microchannel and a plurality of inlet/outlet interface ports (21-25, 71-72),
the method being **characterized in that** it comprises:

  - successively applying a plurality of pressures on at least one of said plurality of inlet/outlet interface ports (21-25, 71-72),
  - measuring, at a flow-rate measuring point (31-33, 61-62) in the micro fluidic network, a time series of flow-rate values of the fluid generated by the micro fluidic network in response to the plurality of applied pressures,
  - estimating parameters of a model of the microfluidic network response to input pressure values based on the applied pressure values and the measured time series of output flow-rate values,
  - computing a target pressure value at each of the at least one inlet/outlet interface ports (21-25, 71-72) corresponding to a predetermined flow-rate value at the flow-rate measuring point (31-33, 61-62), wherein the predetermined flow-rate value corresponds to an output value of the model of the microfluidic network response to the target pressure value, and
  - applying the computed target pressure value on each of the at least one inlet/outlet interface ports (21-25, 71-72).

2.   The method according to claim 1, wherein the time series of flow-rate values is measured at a predetermined rate.

3.   The method according to claim 1 or claim 2, wherein the model of the microfluidic network response to input pressure values comprises a dynamic linear transfer function ($H_d(Z)$) representing a matrix, each element of which being a scalar transfer function showing the influence of a pressure to a flow-rate through the transient regime.

4.   The method according to claim 3, comprising:

  - estimating the parameters of the dynamic linear transfer function using flow-rate values measured within a first predetermined time ($T_{HP}$) after application of the pressures,

wherein the first predetermined time ($T_{HP}$) is greater than a predetermined characteristic time ($T_{dyn}$) of the dynamic linear transfer function.

5.   The method according to claim 3 or claim 4, wherein the model of the microfluidic network response to input pressure values comprises offset parameters.

6.   The method according to claim 5, wherein the first predetermined time ($T_{HP}$) is lower than a predetermined time characteristic of the offset contribution ($T_{off}$).

7.   The method according to any of claims 5 to 6, comprising:

  - estimating the offset parameters using the flow-rate values measured after a second predetermined time ($T_{LP}$) after application of the pressures.

8.   The method according to any of claims 4 to 7, wherein the model of the microfluidic network response to input pressure values comprises error parameters.

9. The method according to any of the preceding claims, wherein:

> - at least a second plurality of flow-rate values of the fluid at at least a second flow-rate measuring point (31-33, 61-62) in the microfluidic network are measured in response to the plurality of pressures applied,
> - the parameters of the model of the microfluidic network response to input pressure values are estimated further based on the output flow-rate values measured at the at least second flow-rate measuring point (31-33, 61-62), and
> - the computed target pressure value at each of the at least one inlet/outlet interface ports (21-25, 71-72) correspond to predefined flow-rate values at respective flow-rate measuring points (31-33, 61-62), wherein the predetermined flow-rate values correspond to output values of the model of the microfluidic network response to the target pressure value.

10. The method according to any of the preceding claims, further comprising dynamically updating the parameters of the models.

11. The method according to claim 10, comprising:

> - measuring, at the flow-rate measuring point (31-33, 61-62) in the microfluidic network, a flow-rate value of the fluid generated by the microfluidic network in response to the applied target pressure,
> - occasionally or periodically re-estimating the parameters of the model of the microfluidic network response to input pressure values based on the applied target pressure value and the measured output flow-rate values,
> - occasionally or periodically re-computing the target pressure value at each of the at least one inlet/outlet interface ports (21-25, 71-72) corresponding to the predetermined flow-rate value at the flow-rate measuring, and
> - re-applying the re-computed target pressure on the at least one inlet/outlet interface port (21-25, 71-72).

12. The method according to any of the preceding claims, wherein pressures are applied within predetermined working ranges.

13. The method according to claim 12, further comprising alerting the user if a computed target pressure value falls outside the predetermined working range.

14. A microfluidic network controller for controlling a flow-rate of a fluid flowing in a microfluidic network comprising at least one microchannel and a plurality of inlet/outlet interface ports (21-25, 71-72), the microfluidic network controller being **characterized in that** it comprises an identification module (51) configured for:

> - estimating parameters of a model of the microfluidic network response to input pressure values based on pressure values successively applied on at least one of said plurality of inlet/outlet interface ports (21-25, 71-72), and time series of output flow-rates that are generated by the micro fluidic network in response to the plurality of pressures applied, and that are measured at a flow-rate measuring point (31-33, 61-62);

the microfluidic network controller being further **characterized in that** it comprises a command module (53) configured for:

> - computing a target pressure value at each of the at least one inlet/outlet interface ports (21-25, 71-72) corresponding to a predetermined flow-rate value at the flow-rate measuring point (31-33, 61-62), wherein the predetermined flow-rate value corresponds to an output value of the model of the microfluidic network response to the target pressure value, and
> - applying the computed target pressure value on each of the at least one inlet/outlet interface ports (21-25, 71-72).

15. A microfluidic device comprising a microfluidic network and a microfluidic network controller according to claim 14.

**Patentansprüche**

1. Verfahren zur Steuerung einer Durchflussrate wenigstens eines Fluids, das in einem Mikrofluidiksystem fließt, welches wenigstens einen Mikrokanal und eine Mehrzahl von Eingangs-/Ausgangsöffnungen (21-25, 71-72) aufweist, wobei das Verfahren **dadurch gekennzeichnet ist, dass** es folgende Schritte aufweist:

- sukzessives Anlegen von verschiedenen Drücken an wenigstens einer der Mehrzahl von Eingangs-/Ausgangsöffnungen (21-25, 71-72),
- Messen einer Zeitreihe von Durchflussratenwerten des von dem Mikrofluidiksystem erzeugten Fluids an einem Durchflussratenmesspunkt (31-33, 61-62) in dem Mikrofluidiksystem als Folge der Mehrzahl von angelegten Drücken,
- Bestimmen von Parametern eines Modells der Mikrofluidiksystemreaktion auf Eingangsdruckwerte auf der Basis der Werte der angelegten Drücke und gemessenen Zeitreihen von Ausgangsdurchflussratenwerten,
- Berechnen eines Solldruckwertes an jeder der wenigstens einen Eingangs-/Ausgangsöffnung (21-25, 71-72) entsprechend eines vorbestimmten Durchflussratenwerts an dem Durchflussratenmesspunkt (31-33, 61-62), wobei der vorbestimmte Durchflussratenwert einem Ausgangswert des Modells der Mikrofluidiksystemreaktion auf den Solldruckwert entspricht, und
- Anlegen des berechneten Druckwerts an jede der wenigstens einen Eingangs-/Ausgangsöffnungen (21-25, 71-72).

2. Verfahren gemäß Anspruch 1, wobei die Zeitreihe der Durchflussratenwerte mit vorbestimmter Frequenz erfolgt.

3. Verfahren gemäß Anspruch 1 oder 2, wobei das Modell der Mikrofluidiksystemreaktion auf die Eingangsdruckwerte eine dynamische lineare Transferfunktion ($H_d(Z)$) umfasst, die eine Matrix darstellt, wobei jedes Element der Matrix eine skalare Transferfunktion ist, die den Einfluss eines Drucks, der auf eine Durchflussrate durch einen Übergangsbereich ausgeübt wird, darstellt.

4. Verfahren gemäß Anspruch 3, umfassend:

- Bestimmen der Parameter der dynamischen linearen Transferfunktion unter Verwendung von innerhalb einer ersten vorbestimmten Zeit ($T_{HP}$) nach Anlegen der Drücke gemessenen Durchflussratenwerten,

wobei die erste vorbestimmte Zeit ($T_{HP}$) länger als eine vorbestimmte charakteristische Zeit ($T_{dyn}$) der dynamischen linearen Transferfunktion ist.

5. Verfahren gemäß Anspruch 3 oder 4, wobei das Modell der Mikrofluidiksystemreaktion auf Eingangsdruckwerte Offset-Parameter umfasst.

6. Verfahren gemäß Anspruch 5, wobei die erste vorbestimmte Zeit ($T_{HP}$) kürzer als eine vorbestimmte Zeitcharakteristik der Offset-Kontribution ($T_{off}$) ist.

7. Verfahren gemäß einem der Ansprüche 5 bis 6, umfassend:

- Bestimmen der Offset-Parameter unter Verwendung der nach einer zweiten vorbestimmten Zeit ($T_{LP}$) nach Anlegen der Drücke gemessenen Durchflussratenwerte.

8. Verfahren gemäß einem der Ansprüche 4 bis 7, wobei das Modell der Mikrofluidiksystemreaktion auf Eingangsdruckwerte Fehlerparameter umfasst.

9. Verfahren gemäß einem der vorhergehenden Ansprüche, wobei

- wenigstens eine zweite Mehrzahl von Durchflussratenwerten des Fluids an wenigstens einem zweiten Durchflussratenmesspunkt (31-33, 61-62) in dem Mikrofluidiksystem als Folge der Mehrzahl von angelegten Drücken gemessen werden,
- die Parameter des Modells der Mikrofluidiksystemreaktion auf Eingangsdruckwerte des Weiteren auf der Basis der an dem wenigstens zweiten Durchflussratenmesspunkt (31-33, 61-62) gemessenen Ausgangsdurchflussratenwerten bestimmt werden, und
- der berechnete Solldruckwert an jeder der wenigstens einen Eingangs-/Ausgangsöffnung (21-25, 71-72) vorbestimmten Durchflussratenwerten an den entsprechenden Durchflussratenmesspunkten (31-33, 61-62) entsprechen, wobei die vorbestimmten Durchflussratenwerte Ausgangswerten des Modells der Mikrofluidiksystemreaktion auf den Solldruckwert entsprechen.

**10.** Verfahren gemäß einem der vorhergehenden Ansprüche, das des Weiteren eine dynamische Aktualisierung der Parameter des Modells umfasst.

**11.** Verfahren gemäß Anspruch 10, umfassend:

- Messen eines Durchflussratenwerts des von dem Mikrofluidiksystem erzeugten Fluids an einem Durchflussratenmesspunkt (31-33, 61-62) in dem Mikrofluidiksystem als Folge des angelegten Solldrucks,
- gelegentliches oder periodisches Neubestimmen der Parameter des Modells der Mikrofluidiksystemreaktion auf Eingangsdruckwerte auf der Basis des angelegten Solldruckwerts und der gemessenen Ausgangsdurchflussratenwerte,
- gelegentliches oder periodisches Neuberechnen des Solldruckwerts an jeder der wenigstens einen Ein-gangs-/Ausgangsöffnung (21-25, 71-72) entsprechend des vorbestimmten Durchflussratenwerts bei der Durchflussratenmessung, und
- Neuanlegen des neuberechneten Solldrucks an die wenigstens eine Eingangs-/Ausgangsöffnung (21-25, 71-72).

**12.** Verfahren gemäß einem der vorhergehenden Ansprüche, wobei Drücke innerhalb bestimmter Arbeitsbereiche angelegt werden.

**13.** Verfahren gemäß Anspruch 12, das des Weiteren die Alarmierung des Benutzers umfasst, wenn ein berechneter Solldruckwert außerhalb des vorbestimmten Arbeitsbereichs fällt.

**14.** Mikrofluidiksystemsteuerung zur Steuerung einer Durchflussrate eines Fluids, das in einem Mikrofluidiksystem fließt, welches wenigstens einen Mikrokanal und eine Mehrzahl von Eingangs-/Ausgangsöffnungen (21-25, 71-72) aufweist,
wobei die Mikrofluidiksystemsteuerung **dadurch gekennzeichnet ist, dass** sie ein Identifikationsmodul (51) aufweist, das dazu ausgebildet ist:

- Parameter eines Modells der Mikrofluidiksystemreaktion auf Eingangsdruckwerte auf der Basis von Druckwerten zu bestimmen, die sukzessiv an wenigstens eine der Mehrzahl von Eingangs-/Ausgangsöffnungen (21-25, 71-72) angelegt werden, sowie Zeitreihen von Ausgangsdurchflussraten, die von dem Mikrofluidiksystem als Folge der Mehrzahl von angelegten Drücken erzeugt und an dem Durchflussratenmesspunkt (31-33, 61-62) gemessen werden;

wobei die Mikrofluidiksystemsteuerung des Weiteren **dadurch gekennzeichnet ist, dass** sie ein Befehlsmodul (53) aufweist, das dazu ausgebildet ist:

- einen Solldruckwert an jeder der wenigstens einen Eingangs-/Ausgangsöffnungen (21-25, 71-72) entsprechend eines vorbestimmten Durchflussratenwerts an dem Durchflussratenmesspunkt (31-33, 61-612) zu berechnen, wobei der vorbestimmte Durchflussratenwert einem Ausgangswert des Modells der Mikrofluidiksystemreaktion auf den Solldruckwert entspricht, und
- den berechneten Druckwert an jede der wenigstens einen Eingangs-/Ausgangsöffnungen (21-25, 71-72) anzulegen.

**15.** Mikrofluidikvorrichtung umfassend ein Mikrofluidiksystem und eine Mikrofluidiksystemsteuerung gemäß Anspruch 14.

## Revendications

**1.** Procédé de contrôle du débit d'au moins un fluide circulant dans un réseau microfluidique comprenant au moins un microcanal et une pluralité d'orifices d'interface d'entrée/sortie (21-25, 71-72),
le procédé étant **caractérisé en ce qu'**il comprend :

- l'application successive d'une pluralité de pressions sur au moins l'un de ladite pluralité d'orifices d'interface d'entrée/sortie (21-25, 71-72),
- la mesure, en un point de mesure du débit (31-33, 61-62) dans le réseau microfluidique, d'une série temporelle de valeurs de débit du fluide générées par le réseau microfluidique en réponse à la pluralité des pressions appliquées,

- l'estimation des paramètres d'un modèle de la réponse du réseau microfluidique aux valeurs de pression d'entrée sur la base des valeurs de pression appliquées et de la série temporelle mesurée des valeurs de débit de sortie,

- le calcul d'une valeur de pression cible à chacun desdits au moins un orifice d'interface d'entrée/sortie (21-25, 71-72) correspondant à une valeur de débit prédéterminée au point de mesure du débit (31-33, 61-62), dans lequel la valeur de débit prédéterminée correspond à une valeur de sortie du modèle de la réponse du réseau microfluidique à la valeur de pression cible, et

- l'application de la valeur de pression cible calculée sur chacun desdits au moins un orifice d'interface d'entrée/sortie (21-25, 71-72).

2. Procédé selon la revendication 1, dans lequel la série temporelle des valeurs de débit est mesurée à une cadence prédéterminée.

3. Procédé selon la revendication 1 ou la revendication 2, dans lequel le modèle de la réponse du réseau microfluidique aux valeurs de pression d'entrée comprend une fonction de transfert linéaire dynamique $(H_d(Z))$ représentant une matrice, dont chaque élément est une fonction de transfert scalaire montrant l'influence d'une pression sur un débit à travers le régime transitoire.

4. Procédé selon la revendication 3, comprenant :

- l'estimation des paramètres de la fonction de transfert linéaire dynamique en utilisant les valeurs de débit mesurées dans un premier temps prédéterminé $(T_{HP})$ après application des pressions,

dans lequel le premier temps prédéterminé $(T_{HP})$ est supérieur à un temps caractéristique prédéterminé $(T_{dyn})$ de la fonction de transfert linéaire dynamique.

5. Procédé selon la revendication 3 ou la revendication 4, dans lequel le modèle de la réponse du réseau microfluidique aux valeurs de pression d'entrée comprend des paramètres de décalage.

6. Procédé selon la revendication 5, dans lequel le premier temps prédéterminé $(T_{HP})$ est inférieur à un temps caractéristique prédéterminé de la contribution de compensation $(T_{off})$.

7. Procédé selon l'une quelconque des revendications 5 à 6, comprenant :

- l'estimation des paramètres de décalage en utilisant les valeurs de débit mesurées après un second temps prédéterminé $(T_{LP})$ après application des pressions.

8. Procédé selon l'une quelconque des revendications 4 à 7, dans lequel le modèle de la réponse du réseau microfluidique aux valeurs de pression d'entrée comprend des paramètres d'erreur.

9. Procédé selon l'une quelconque des revendications précédentes, dans lequel :

- au moins une deuxième pluralité de valeurs de débit du fluide à au moins un deuxième point de mesure de débit (31-33, 61-62) dans le réseau microfluidique sont mesurées en réponse à la pluralité de pressions appliquées,

- les paramètres du modèle de la réponse du réseau microfluidique aux valeurs de pression d'entrée sont estimés en outre sur la base des valeurs de débit de sortie mesurées audit au moins un deuxième point de mesure du débit (31-33, 61-62), et

- la valeur de pression cible calculée à chacun desdits au moins un orifice d'interface d'entrée/sortie (21-25, 71-72) correspond à des valeurs de débit prédéterminées à des points de mesure du débit respectifs (31-33, 61-62), dans lequel les valeurs de débit prédéterminées correspondent à des valeurs de sortie du modèle de la réponse du réseau microfluidique à la valeur de pression cible.

10. Procédé selon l'une des revendications précédentes, comprenant en outre la mise à jour dynamique des paramètres des modèles.

11. Procédé selon la revendication 10, comprenant :

- la mesure, au point de mesure du débit (31-33, 61-62) dans le réseau microfluidique, d'une valeur de débit du fluide générée par le réseau microfluidique en réponse à la pression cible appliquée,
- la réestimation occasionnelle ou périodique des paramètres du modèle de la réponse du réseau microfluidique aux valeurs de pression d'entrée en fonction de la valeur de pression cible appliquée et des valeurs de débit de sortie mesurées,
- le recalcul occasionnel ou périodique de la valeur de pression cible à chacun desdits au moins un port d'interface d'entrée/sortie (21-25, 71-72) correspondant à la valeur de débit prédéterminée à la mesure du débit, et
- la réapplication de la pression cible recalculée sur chacun des au moins un orifice d'interface d'entrée/sortie (21-25, 71-72).

12. Procédé selon l'une quelconque des revendications précédentes, dans lequel les pressions sont appliquées dans des plages de travail prédéterminées.

13. Procédé selon la revendication 12, comprenant en outre l'alerte de l'utilisateur si une valeur de pression cible calculée tombe en dehors de la plage de travail prédéterminée.

14. Contrôleur de réseau microfluidique pour le contrôle d'un débit d'un fluide circulant dans un réseau microfluidique comprenant au moins un microcanal et une pluralité d'orifices d'interface d'entrée/sortie (21-25, 71-72), le contrôleur de réseau microfluidique étant **caractérisé en ce qu'**il comprend un module d'identification (51) configuré pour :

- l'estimation des paramètres d'un modèle de la réponse du réseau microfluidique aux valeurs de pression d'entrée sur la base des valeurs de pression appliquées successivement sur au moins un de ladite pluralité d'orifices d'interface d'entrée/sortie (21-25, 71-72), et des séries temporelles de débits de sortie qui sont générés par le réseau microfluidique en réponse à la pluralité de pressions appliquées, et qui sont mesurés à un point de mesure de débit (31-33, 61-62) ;

le contrôleur de réseau microfluidique étant également **caractérisé en ce qu'**il comprend un module de commande (53) configuré pour :

- le calcul d'une valeur de pression cible à chacun desdits au moins un orifice d'interface d'entrée/sortie (21-25, 71-72) correspondant à une valeur de débit prédéterminée au point de mesure du débit (31-33, 61-62), dans lequel la valeur de débit prédéterminée correspond à une valeur de sortie du modèle de la réponse du réseau microfluidique à la valeur de pression cible, et
- l'application de la valeur de pression cible calculée sur chacun desdits au moins un orifice d'interface d'entrée/sortie (21-25, 71-72).

15. Dispositif microfluidique comprenant un réseau microfluidique et un contrôleur de réseau microfluidique selon la revendication 14.

Figure 1

Figure 2

EP 2 720 103 B1

Figure 3A

Figure 3B

Figure 4

Figure 5

Figure 6

Figure 7

Figure 8

Figure 9

EP 2 720 103 B1

**EP 2 720 103 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030182991 A